# EUROPEAN PATENT APPLICATION

(11) **EP 2 905 688 A1**
(43) Date of publication of application: **12.08.2015**
(21) Application number: 15153807.1
(22) Date of filing: 04.02.2015
(51) Int. Cl.: G06F 3/0484, G06F 21/31

(54) **Method for controlling lock function and apparatus**

(30) Priority: 05.02.2014 KR 20140013248
(71) Applicant: Samsung Electronics Co., Ltd, Gyeonggi-do 443-742 (KR)
(72) Inventor: Kwak, Tae-Won, Gyeonggi-do (KR)
(74) Representative: Gover, Richard Paul

(57) **Abstract**

An electronic device and method are disclosed. The electronic device apparatus includes a memory, a display operatively coupled to the electronic device; and a processor. The processor may implement the method, which includes detecting a first input via the display, displaying a radial pattern input window to the display, detecting a second input forming a pattern including at least one of a straight line and a curved line within the radial pattern input window, and when the pattern corresponds to a stored pattern associated with a predetermined function, executing the predetermined function based on the second input.

## Description

### BACKGROUND

### 1. Field of the Disclosure

The present disclosure relates to a method for controlling a lock function and an electronic device thereof.

### 2. Description of Related Art

With the advance of information communication techniques and semiconductor techniques, various electronic devices are increasingly able to provide diverse and sophisticated multimedia services. For example, the electronic device may provide multimedia services such as a messenger service, a broadcast service, a wireless Internet service, a camera service, and a music play service.

A touch screen input technique has recently been implemented for portable terminals, and there is a growing preference for portable terminals equipped with touch screens. The electronic device provides a lock function to prevent erroneous touch operations, and to provide a layer of security for the electronic device. Generally, a user of the electronic device may input an input pattern having a specific shape to release a the lock function.

Various unlock schemes may be used to release the lock function, such as a "pattern unlock" or "9-dot" pattern scheme, a character recognition scheme, a shape recognition scheme, or the like.

In case of the 9-dot pattern scheme, the user has to select each pattern which appears as a whole in a large screen of the electronic device, and thus there is a deterioration of user convenience. Further, with character recognition schemes and shape recognition schemes, because the might input a slightly different pattern each time, and a rate of pattern misrecognition may be high.

### SUMMARY

An embodiment of the present disclosure provides a method of controlling a lock function for improving a security in an electronic device, and the electronic device using the method.

An embodiment of the present disclosure provides a method of controlling a lock function capable of improving user convenience for a pattern input in an electronic device and capable of decreasing a misrecognition rate, and the electronic device using the method.

An embodiment of the present disclosure provides a method of controlling a lock function capable of intuitively performing a lock release in an electronic device, and the electronic device using the method.

According to aspects of the present disclosure, a method of an electronic device is disclosed, including detecting a first input via a display operatively coupled to the electronic device, displaying a radial pattern input window to the display, detecting a second input forming a pattern including at least one of a straight line and a curved line within the radial pattern input window, and when the pattern corresponds to a stored pattern associated with a predetermined function, executing the predetermined function based on the second input.According to aspects of the present disclosure, an electronic device apparatus includes a memory, a display operatively coupled to the electronic device, and a processor for detecting a first input via the display, displaying a radial pattern input window to the display, detecting a second input forming a pattern including at least one of a straight line and a curved line within the radial pattern input window, and when the pattern corresponds to a stored pattern associated with a predetermined function, executing the predetermined function based on the second input.

### BRIEF DESCRIPTION OF THE DRAWINGS

The various aspects of the present disclosure will be more apparent from the following detailed description taken in conjunction with the accompanying drawings, in which:
FIG. 1 is a block diagram of an electronic device according to various embodiments of the present disclosure;
FIG. 2 is a detailed block diagram of a processor according to an embodiment of the present disclosure;
FIG. 3A illustrates a procedure for performing a determined function by using an input pattern in an electronic device according to an embodiment of the present disclosure;
FIG. 3B illustrates a detailed procedure of operation 320 of FIG. 3A according to an embodiment of the present disclosure;
FIG. 4 is a diagram for explaining a radial input pattern window according to an embodiment of the present disclosure;
FIG. 5A and FIG. 5B are diagrams for explaining a method of inputting a pattern to a radial input pattern window according to an embodiment of the present disclosure;
FIGS. 6A, 6B and 6C are diagrams for explaining a method of applying an allowable error of an input pattern in an electronic device according to an embodiment of the present disclosure;
FIGS. 7A, 7B and 7C are diagrams for explaining a method of applying an allowable error of an input pattern in an electronic device according to an embodiment of the present disclosure;
FIG. 8 illustrates a procedure for performing a determined function by using an input pattern in an electronic device according to an embodiment of the present disclosure;
FIGS. 9A, 9B and 9C illustrate a screen configuration for performing a determined function by using an input pattern in an electronic device according to an embodiment of the present disclosure;
FIGS. 10A, 10B, 10C and 10D illustrate a screen configuration for performing a determined function by using an input pattern in an electronic device according to an embodiment of the present disclosure;
FIG. 11 illustrates a procedure for performing a determined function by using an input pattern in an electronic device according to an embodiment of the present disclosure;
FIGS. 12A, 12B and 12C illustrate a screen configuration for performing a determined function by using an input pattern in an electronic device according to an embodiment of the present disclosure;
FIG. 13 illustrates an example for displaying a pattern input window by considering a user's physical feature in an electronic device according to an embodiment of the present disclosure; and
FIG. 14 illustrates a block diagram of an electronic device according to various embodiments of the present disclosure.

### DETAILED DESCRIPTION

Hereinafter, the present disclosure is described with reference to the accompanying drawings. While the present disclosure is susceptible to various modifications and alternative forms, a specific embodiment thereof has been shown by way of example in the drawings and will herein be described in detail. It should be understood, however, that it is not intended to limit the present disclosure to the particular form disclosed, but, on the contrary, the present disclosure is to cover all modifications, equivalents, and alternatives falling within the ambit of the present disclosure as defined by the appended claims. Like reference numerals denote like elements throughout the drawings.

The expression "include" or "may include" used in the present disclosure is intended to indicate a presence of a corresponding function, operation, or element, and it is not intended to limit a presence of one or more functions, operations, or elements. In addition, in the present disclosure, the term "include" or "have" is intended to indicate that characteristics, numbers, operations, operations, elements, and components disclosed in the specification or combinations thereof exist. As such, the term "include" or "have" should be understood that there are additional possibilities of one or more other characteristics, numbers, operations, operations, elements, elements or combinations thereof.

In the present disclosure, an expression "or" includes any and all combinations of words enumerated together. For example, "A or B" may include A or B, or may include both A and B.

Although expressions such as "1^{st}", "2^{nd}", "first", and "second" may be used to express various elements of the present disclosure, it is not intended to limit the corresponding elements. For example, the above expressions are not intended to limit an order or an importance of the corresponding elements. The above expressions may be used to distinguish one element from another element. For example, a 1^{st} user device and a 2^{nd} user device are both user devices, and indicate different user devices. For example, a 1^{st} element may be termed a 2^{nd} element, and similarly, the 2^{nd} element may be termed the 1^{st} element without departing from the scope of the present disclosure.

When an element is mentioned as being "connected" to or "accessing" another element, this may mean that it is directly connected to or accessing the other element, but it is to be understood that there are no intervening elements present. On the other hand, when an element is mentioned as being "directly connected" to or "directly accessing" another element, it is to be understood that there are no intervening elements present.

The terminology used in the present disclosure is for the purpose of describing particular embodiments only and is not intended to be limiting of the present disclosure. A singular expression includes a plural expression unless there is a contextually distinctive difference therebetween.

Unless otherwise defined, all terms (including technical and scientific terms) used herein have the same meaning as commonly understood by those ordinarily skilled in the art to which the present disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

An electronic device according to the present disclosure may be a device including a touch input function. For example, the electronic device may include at least one of a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), a MPEG-1 Audio Layer 3 (MP3) player, a mobile medical device, a camera, and a wearable device (e.g., a Head-Mounted-Device (HMD) such as electronic glasses, electronic clothes, an electronic bracelet, an electronic necklace, an electronic appcessory, an electronic tattoo, or a smart watch).

According to certain embodiments, the electronic device may be a smart home appliance having a touch input function. For example, the smart home appliance may include at least one of a TeleVision (TV), a Digital Video Disk (DVD) player, an audio, a refrigerator, an air conditioner, a cleaner, an oven, a microwave oven, a washing machine, an air purifier, a set-top box, a TV box (e.g., Samsung HomeSync™, Apple TV™, or Google TV™), a game console, an electronic dictionary, an electronic key, a camcorder, oran electronic picture frame.

According to certain embodiments, the electronic device may include at least one of various medical devices (e.g., Magnetic Resonance Angiography (MRA), Magnetic Resonance Imaging (MRI), Computed Tomography (CT), imaging equipment, ultrasonic instrument, etc.), a navigation device, a Global Positioning System (GPS) receiver, an Event Data Recorder (EDR), a Flight Data Recorder (FDR), a car infotainment device, an electronic equipment for ship (e.g., a vessel navigation device, a gyro compass, etc.), avionics, a security device, or an industrial or domestic robot.

According to certain embodiments, the electronic device may include at least one of a furniture or a part of building/constructions including a touch input function, an electronic board, an electronic signature receiving device, a projector, or various measurement machines (e.g., water supply, electricity, gas, propagation measurement machine, etc.). The electronic device according to the present disclosure may be one or more combinations of the aforementioned various devices. In addition, it is apparent those ordinarily skilled in the art that the electronic device according to the present disclosure is not limited to the aforementioned devices.

Hereinafter, an electronic device according to various embodiments will be described with reference to the accompanying drawings. The term 'user' used in the various embodiments may refer to a person who uses the electronic device or a device (e.g., an Artificial Intelligence (AI) electronic device) which uses the electronic device.

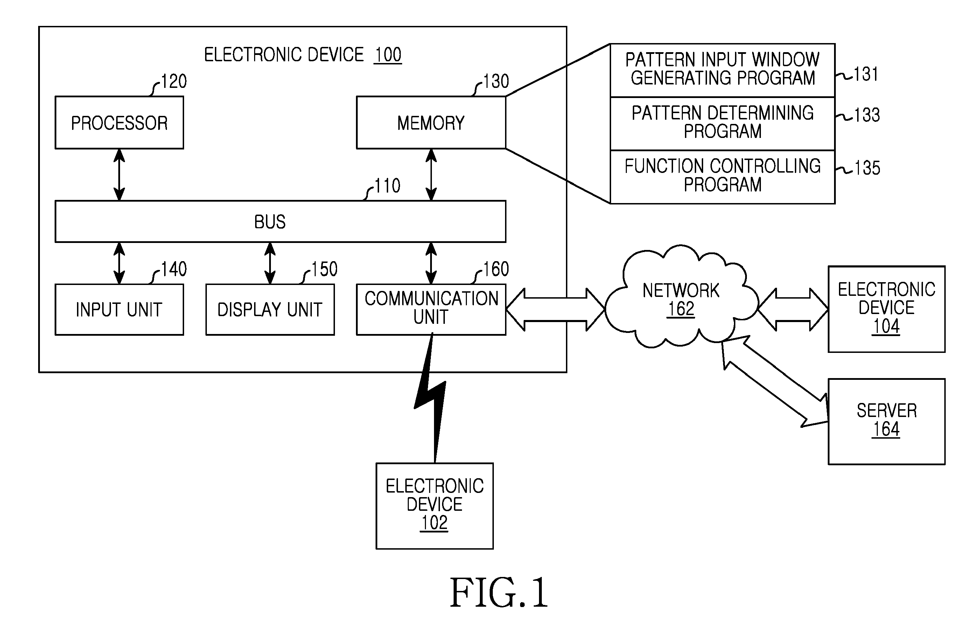

FIG. 1 is a block diagram of an electronic device according to various embodiments of the present disclosure.

Referring to FIG. 1, an electronic device 100 may include a bus 110, a processor 120, a memory 130, an input unit 140, a display unit 150, and a communication unit 160.

The bus 110 may be a circuit for connecting the aforementioned elements (e.g., the processor 120, the memory 130, the input unit 140, the display unit 150, and the communication unit 160) and for delivering communication between the aforementioned elements.

The processor 120 may receive an instruction from other elements included in the electronic device 100 via the bus 110, and may interpret the received instruction and execute an arithmetic operation or data processing according to the interpreted instruction. In this case, the processor 120 executes at least one program stored in the memory 130 and provides a service according to the program. For example, the processor 120 may execute a pattern input window generating program 131, a pattern determining program 133, and a function controlling program 135 so as to display a radial pattern input window to a touch input area, may input an input pattern including at least one of a straight line ora curved line to the pattern input window so as determine whether the input pattern coincides with a designated input pattern, and if the input pattern coincides with the designated input pattern, may provide control to perform a determined function.

In addition, the processor 120 may include one or more Application Processors (APs) or one or more Communication Processors (CPs). Herein, the AP and the CP may be included in the processor 120 or may be included respectively in different Integrated Circuit (IC) packages. In addition, the AP and the CP may be included in one IC package.

The AP may control a plurality of hardware or software elements connected to the AP by driving an operating system or an application program, and may process a variety of data including multimedia data and may perform an arithmetic operation. Herein, the AP may be implemented with a System on Chip (SoC).

The CP may perform at least a part of a multimedia control function. In addition, the CP may identify and authenticate a terminal in a communication network by using a subscriber identity module (e.g., a Subscriber Identity Module (SIM) card). In this case, the CP may provide a service including a voice call, a video call, a text message, or packet data to a user. In addition, the CP may control data transmission/reception of the communication unit 160.

The AP or the CP may load an instruction or data, which is received from each non-volatile memory connected thereto or at least one of different elements, to a volatile memory and may process the instruction or data. The AP or the CP may store data, which is received from at least one of different elements or generated by at least one of different elements, in the non-volatile memory.

The CP may perform a function of managing a data link and changing a communication protocol in communication between different electronic devices connected through a network to an electronic device including hardware elements. Herein, the CP may be implemented with a SoC.

The processor 120 may include one or more data processors, image processors, and CODECs. Further, the electronic device 100 may separately configure the data processor, the image processor, or the CODEC.

In addition, the processor 120 may further include a Graphic Processing Unit (GPU).

The memory 130 may store an instruction or data received from one or more elements (e.g., the processor 120, the input unit 140, the display unit 150, or the communication unit 160) or generated by the one or more elements.

The memory 130 stores one or more programs for a service of the electronic device 100. For example, the memory 130 may include the pattern input window generating program 131, the pattern determining program 133, and the function controlling program 135. In this case, each program may be configured with a programming module, and each programming module may be configured in software, firmware, hardware, or at least two or more of combinations thereof.

The pattern input window generating program 131 may include at least one software element to generate a radial pattern input window for receiving a pattern input from the input unit 140. In this case, the pattern input window generating program 131 may provide control to display the radial pattern input window at a touched point according to a touch input which is input from the input unit 140

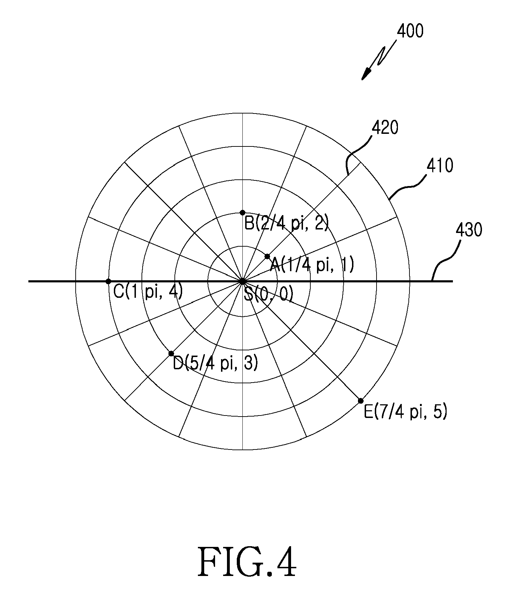

As shown in FIG. 4, the pattern input window generating program 131 may display a radial pattern input window 400 including a plurality of circles 410 overlapping with each other and a plurality of straight lines 420 disposed with an interval corresponding to a specific angle inside a circle located in the outermost portion among the plurality of circles 410. Herein, the pattern input window generating program 131 defines the touched point as a center point S of the radial pattern input window 400. In this case, the radial pattern input window 400 may have a plurality of intersections (e.g., A, B, C, D, E, etc.) at which the plurality of circles 410 and the plurality of straight lines 420 meet. Accordingly, a user can input an input pattern by dragging the plurality of intersections (e.g., A, B, C, D, E, etc.). For example, the pattern input window generating program 131 may arrange the plurality of overlapping circles 410 by considering a user's physical feature such as a user's finger length, finger width, and the like.

The pattern input window generating program 131 may define a coordinate of the aforementioned intersection as an angle coordinate and a radius coordinate. The pattern input window generating program 131 may determine the angle coordinate of the intersection by using a virtual horizontal line 430 with respect to the center point S. Further, the pattern input window generating program 131 may determine the radius coordinate by using a radius of the plurality of circles 410 with respect to the center point S.

For example, the coordinate of the intersection may be defined as (angle coordinate, radius coordinate). In this case, a coordinate of a circle located in the innermost portion with respect to the center point S is (angle coordinate, 1). A coordinate of a circle located in the second innermost portion may be (angle coordinate, 2). In this manner, the coordinate of the circle located in the outermost portion may be (angle coordinate, 5).

The angle coordinate may be determined by using an angle between a radius line of the circle and the horizontal line 430. For example, the angle between the horizontal line 430 and the radius in a counter-clockwise in the horizontal line 430 may be determined as the angle coordinate. That is, a coordinate of the first intersection A is (1/4pi, 1), and a coordinate of the second intersection B is (2/4pi, 2). In this manner, coordinates of third, fourth, and fifth intersections C, D, and E can also be determined.

The pattern determining program 133 may include at least one software element for determining whether a pattern which is input to a pattern input window coincides with a designated input pattern. Herein, the designated input pattern may be an input pattern which is input in advance by a user in a previous pattern registration process. In this case, the pattern determining program 133 may determine whether the input pattern coincides with the designated input pattern by applying an allowable error to the input pattern which is input in advance.

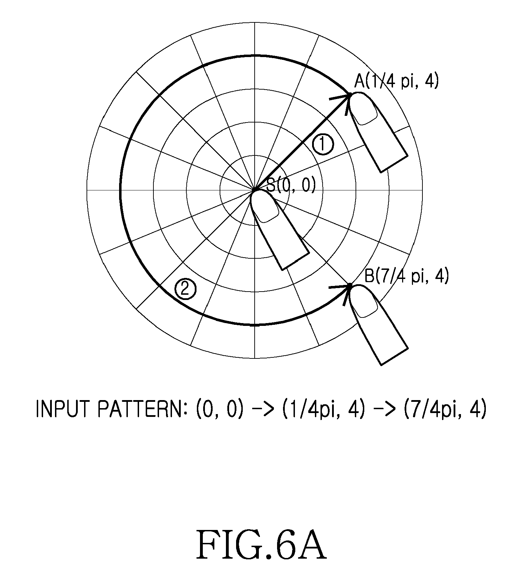

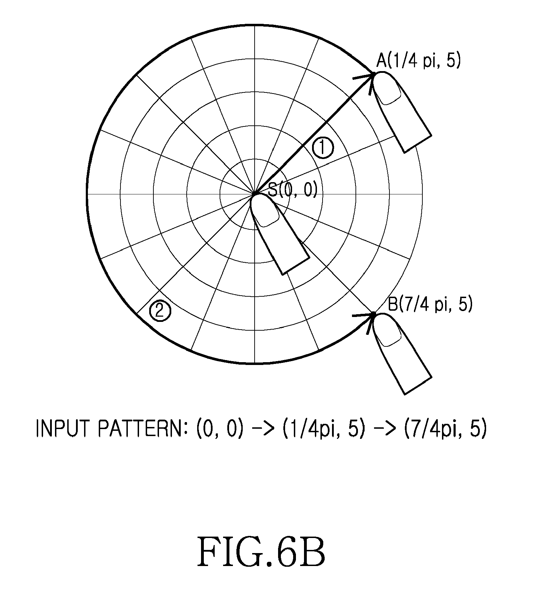

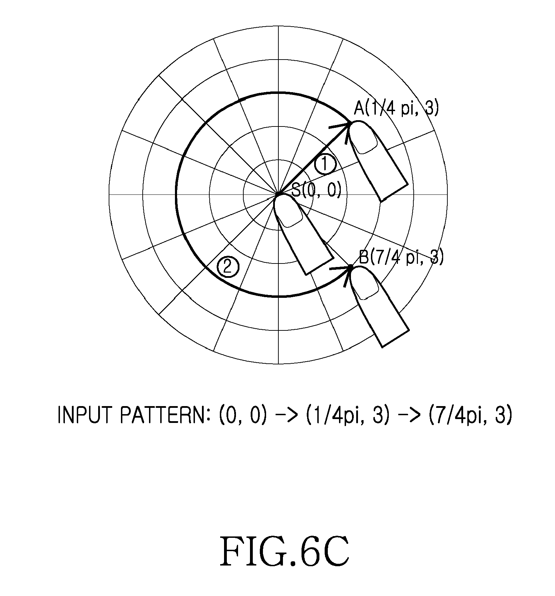

The pattern determining program 133 may apply an allowable error range to a radius coordinate of the input pattern as shown in FIG. 6A to FIG. 6C. For example, if the allowable error range for the radius coordinate is set to about ±1, the pattern determining program 133 may equally recognize all of input patterns (0, 0), (1/4pi, 4), (7/4pi, 4) of FIG. 6A, input patterns (0, 0), (1/4pi, 5), (7/4pi, 5) of FIG. 6B, and input patterns (0, 0), (1/4pi, 3), (7/4pi, 3) of FIG. 6C.

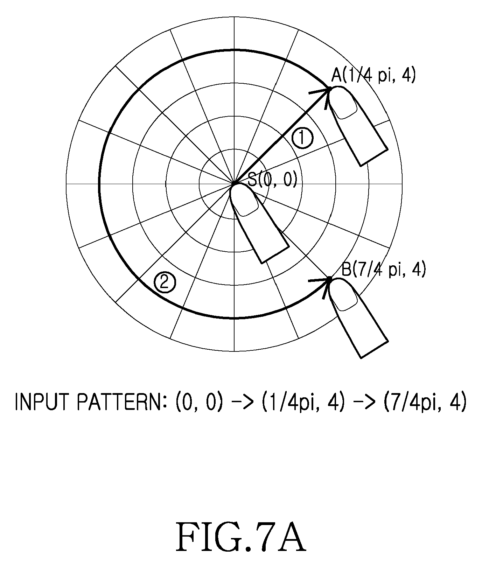

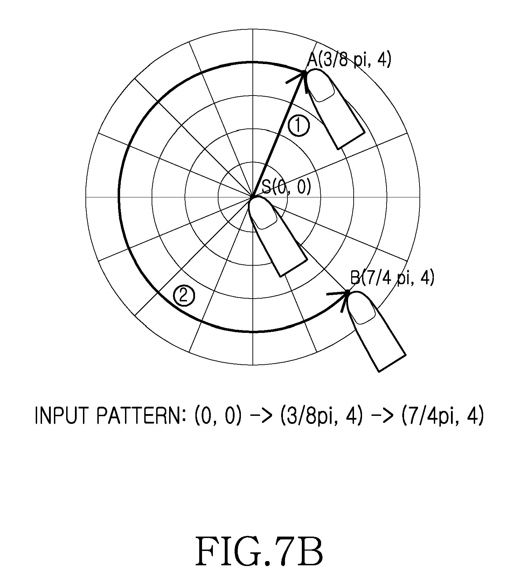

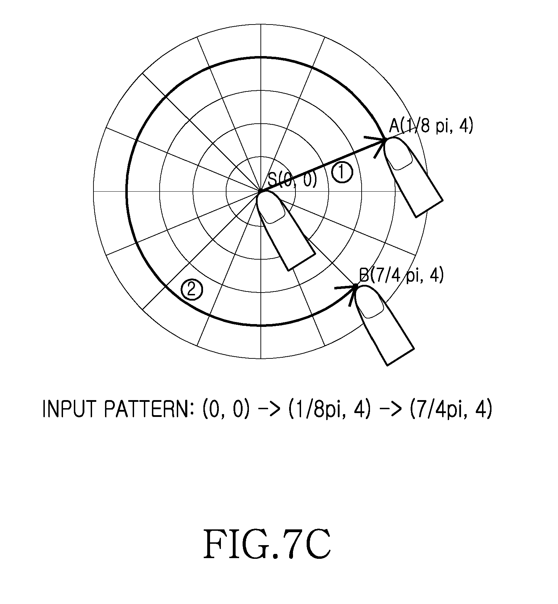

For another example, the pattern determining program 133 may apply the allowable error range to an angle coordinate of an input pattern as shown in FIG. 7A to FIG. 7C. For example, if the allowable error range for the angle coordinate is set to about ±10%, the pattern determining program 133 may equally recognize all of input patterns (0, 0), (1/4pi, 4), (7/4pi, 4) of FIG. 7A, input patterns (0, 0), (3/8pi, 4), (7/4pi, 4) of FIG. 7B, and input patterns (0, 0), (1/8pi, 4), (7/4pi, 4) of FIG. 7C.

For another example, the pattern determining program 133 may apply the allowable error range to both of the radius coordinate and angle coordinate of the input pattern.

The function controlling program 135 may include at least one software element for performing a determined function if the input pattern coincides with the designated input pattern. For example, the function controlling program 135 may release a lock screen, or may allow an access of a specific application. However, the present disclosure is not limited thereto, and various functions that can be executed in the application can be applied.

In addition, the memory 130 may include an internal memory or an external memory.

The internal memory may include at least one of a volatile memory (e.g., a Dynamic RAM (DRAM), a Static RAM (SRAM), a Synchronous Dynamic RAM (SDRAM), etc.) or a non-volatile memory (e.g., a One Time Programmable ROM (OTPROM), a Programmable ROM (PROM), an Erasable and Programmable ROM (EPROM), an Electrically Erasable and Programmable ROM (EEPROM), a Mask ROM, a Flash ROM, a NAND flash memory, a NOR flash memory, etc.). In this case, the internal memory may have a form of a Solid State Drive (SSD).

The external memory may further include Compact Flash (CF), Secure Digital (SD), Micro Secure Digital (Micro-SD), Mini Secure digital (Mini-SD), extreme Digital (xD), memory stick, and the like.

In addition, the memory 130 may further include a kernel, a middleware, and an Application Programming Interface (API).

The kernel may control or manage system resources (e.g., the bus 110, the processor 120, or memory 130) used to execute an operation or function implemented in the remaining other programming modules (e.g., the middleware, the API, or the application). In addition, the kernel may provide a controllable or manageable interface by accessing individual elements of the electronic device 100 in the middleware, the API, or the application.

The middleware may perform a mediating role so that the API or the application communicates with the kernel to exchange data. In addition, regarding task requests received from at least one application, the middleware may perform load balancing for the task request by using a method of assigning a priority capable of using a system resource (e.g., the bus 110, the processor 120, or memory 130) of the electronic device 100.

The API may include at least one interface or function for file control, window control, video processing, or character control, as an interface capable of controlling a function provided by the application in the kernel or the middleware.

The input unit 140 may transmit an instruction or data generated by a user's selection to the processor 120 or the memory 130 via the bus 110. For example, the input unit 140 may include a touch panel, a pen sensor, a key, an ultrasonic input unit, or other pointer units.

The touch panel may recognize a touch input by using at least one of an electrostatic type, a pressure-sensitive type, and an ultrasonic type. The touch panel may further include a controller. In case of the electrostatic type, the touch panel can recognize not only a direct touch but also a proximity touch. The proximity touch is also expressed as a non-contact touch or hovering. The touch penal may further include a tactile layer to provide the user with a tactile reaction. The touch panel may further include a controller.

The display unit 150 may display image, video, or data to the user. The display unit 150 may include a touch panel so that an input function and a display function can be performed simultaneously. The touch panel may include a Liquid-Crystal Display (LCD) or an Active-Matrix Organic Light-Emitting Diode (AM-OLED), and may be implemented in a flexible, transparent, or wearable manner.

The display unit 150 may include a hologram. The hologram may use an interference of light and show a stereoscopic image in the air. The display unit 150 may further include a control circuit for controlling the touch panel or the hologram.

The communication unit 160 may connect communication between the electronic device 100 and one or more different electronic devices 102 or 104 or a server 164. The communication unit 160 may support a specific short distance communication protocol (e.g., Wireless Fidelity (WiFi), Bluetooth (BT), Near Field Communication (NFC), or specific network communication 162 (e.g., Internet, Local Area Network (LAN), Wide Area Network (WAN), telecommunication network, cellular network, satellite network, Plain Old Telephone Service (POTS), etc.).

In addition, the electronic device 100 may further include a sensor module. The sensor module may include at least one of a gesture sensor, a gyro sensor, a pressure sensor, a magnetic sensor, an acceleration sensor, a grip sensor, a proximity sensor, a Red, Green, Blue (RGB) sensor, a bio sensor, a body conductivity sensor, an image sensor, a temperature sensor, a humidity sensor, an illumination sensor, or an Ultra Violet (UV) sensor.

In addition, the sensor module may measure a physical quantity or detect an operation state of the electronic device 100, and thus may convert the measured or detected information into an electric signal. For example, the sensor module may include an E-nose sensor, an ElectroMyoGraphy (EMG) sensor, an ElectroEncephaloGram (EEG) sensor, an ElectroCardioGram (ECG) sensor, a fingerprint sensor, and the like.

Names of elements of the electronic device 100 according to the present embodiment may vary depending on a type of electronic device 100. In addition, the electronic device 100 may include at least one of the aforementioned elements. Some of the elements may be omitted, or additional other elements may be further included.

According to aspects of the present disclosure, an electronic device apparatus includes a memory, a display operatively coupled to the electronic device, anda processor for detecting a first input via the display, displaying a radial pattern input window to the display, detecting a second input forming a pattern including at least one of a straight line and a curved line within the radial pattern input window, and when the pattern corresponds to a stored pattern associated with a predetermined function, executing the predetermined function based on the second input. According to various embodiments, the first input is disposed on an icon displayed to the display, and the predetermined function is associated with the icon.

According to various embodiments, the first input is disposed on a specific area of a lock screen displayed to the display. According to various embodiments, the radial pattern input window comprises a plurality of circles of differing radii, the plurality of circles centered on the first input, and a plurality of radial lines originating from the first input, the radial lines disposed at regular arc intervals of the plurality of circles. According to various embodiments, the at least one of the straight line and curved line is formed by selections indicated by the second input designating particular intersections of some of the plurality of circles and some of the plurality of lines.

According to various embodiments, the pattern represents at least one of a specific character or a specific symbol.

According to various embodiments, each intersection of one of the plurality of circles and one of the plurality of lines defines a coordinate including a radius coordinate indicating a particular circle of the plurality of circles, and an angle coordinate indicating a particular radial line of the plurality of lines ,and the processor further detecting whether the pattern corresponds to a stored pattern by comparing a first sequence of coordinates of the pattern to a second sequence of coordinates of the stored pattern.

According to various embodiments, the processor further defines an allowable error range to at least one of the radius coordinates and angle coordinates in the sequence of the pattern.

According to various embodiments, the predetermined function comprises releasing a lock screen.

According to various embodiments, the predetermined function may include executing a corresponding application.

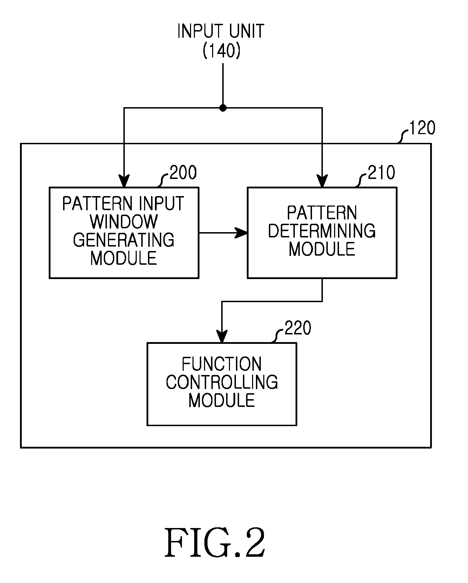

FIG. 2 is a detailed block diagram of a processor according to an embodiment of the present disclosure.

Referring to FIG. 2, a processor 120 may include a pattern input window generating module 200, a pattern determining module 210, and a function controlling module 220.

The pattern input window generating module 200 may execute the pattern input window generating program 131 stored in the memory 130 to generate a radial pattern input window for receiving a pattern input. In this case, the pattern input window generating module 200 may provide control to display the radial pattern input window at a touched point according to a touch input which is input from the input unit 140.

As shown in FIG. 4, the pattern input window generating module 200 may display a radial pattern input window 400 including a plurality of circles 410 overlapping with each other and a plurality of straight lines 420 disposed with an interval corresponding to a specific angle inside a circle located in the outermost portion among the plurality of circles 410. Herein, the pattern input window generating module 200 defines the touched point as a center point S of the radial pattern input window 400. In this case, the radial pattern input window 400 may have a plurality of intersections (e.g., A, B, C, D, E, etc.) at which the plurality of circles 410 and the plurality of straight lines 420 meet. Accordingly, a user can input an input pattern by dragging the plurality of intersections (e.g., A, B, C, D, E, etc.). For example, the pattern input window generating module 200 may arrange the plurality of overlapping circles 410 with consideration of a user's physical features, such as a finger length, finger width, and the like.

The pattern input window generating module 200 may define a coordinate of the aforementioned intersection as an angle coordinate and a radius coordinate. The pattern input window generating module 200 may determine the angle coordinate of the intersection by using a virtual horizontal line 430 with respect to the center point S. Further, the pattern input window generating module 200 may determine the radius coordinate by using a radius of the plurality of circles 410 with respect to the center point S.

For example, the coordinate of the intersection may be defined as (angle coordinate, radius coordinate). In this case, a coordinate of a circle located in the innermost portion with respect to the center point S is (angle coordinate, 1). A coordinate of a circle located in the second innermost portion may be (angle coordinate, 2). In this manner, the coordinate of the circle located in the outermost portion may be (angle coordinate, 5).

The angle coordinate may be determined by using an angle between a radius line of the circle and the horizontal line 430. For example, the angle between the horizontal line 430 and the radius in a counter-clockwise in the horizontal line 430 may be determined as the angle coordinate. That is, a coordinate of the first intersection A is (1/4pi, 1), and a coordinate of the second intersection B is (2/4pi, 2). In this manner, coordinates of third, fourth, and fifth intersections C, D, and E can also be determined.

The pattern determining module 210 may execute the pattern determining program 133 stored in the memory 130 to determine whether a pattern which is input to a pattern input window coincides with a designated input pattern. Herein, the designated input pattern may be an input pattern which is input in advance by a user in a previous pattern registration process. In this case, the pattern determining module 210 may determine whether the input pattern coincides with the designated input pattern by applying an allowable error to the input pattern which is input in advance.

The pattern determining module 210 may apply an allowable error range to a radius coordinate of the input pattern as shown in FIG. 6A to FIG. 6C. For example, if the allowable error range for the radius coordinate is set to about ±1, the pattern determining program 133 may equally recognize all of input patterns (0, 0), (1/4pi, 4), (7/4pi, 4) of FIG. 6A, input patterns (0, 0), (1/4pi, 5), (7/4pi, 5) of FIG. 6B, and input patterns (0, 0), (1/4pi, 3), (7/4pi, 3) of FIG. 6C.

For another example, the pattern determining module 210 may apply the allowable error range to an angle coordinate of an input pattern as shown in FIG. 7A to FIG. 7C. For example, if the allowable error range for the angle coordinate is set to about ±10%, the pattern determining module 210 may equally recognize all of input patterns (0, 0), (1/4pi, 4), (7/4pi, 4) of FIG. 7A, input patterns (0, 0), (3/8pi, 4), (7/4pi, 4) of FIG. 7B, and input patterns (0, 0), (1/8pi, 4), (7/4pi, 4) of FIG. 7C.

For another example, the pattern determining module 210 may apply the allowable error range to both of the radius coordinate and angle coordinate of the input pattern.

The function controlling program 220 may execute the function controlling program 135 stored in the memory 130 to perform a determined function if the input pattern coincides with the designated input pattern. For example, the function controlling module 220 may release a lock screen, or may allow an access of a specific application. However, the present disclosure is not limited thereto, and various functions that can be executed in the application can be applied.

Although elements of the processor 120 may be implemented with separate modules in various embodiments of the present disclosure, the elements may also be constructed of one module in another embodiment.

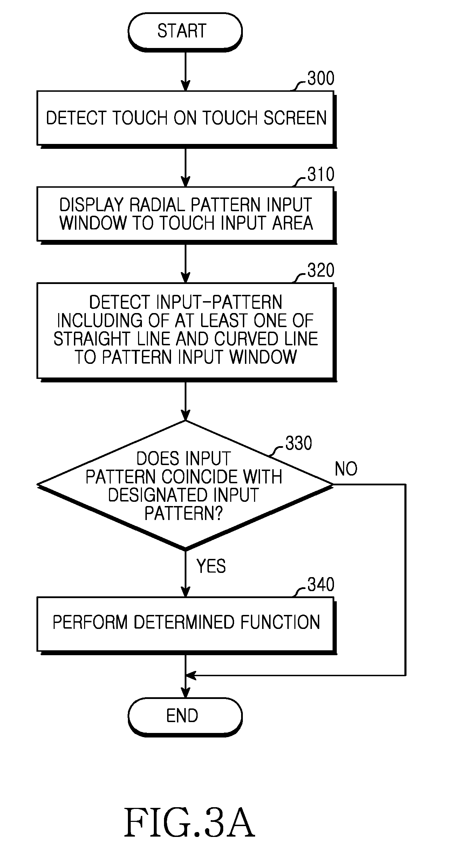

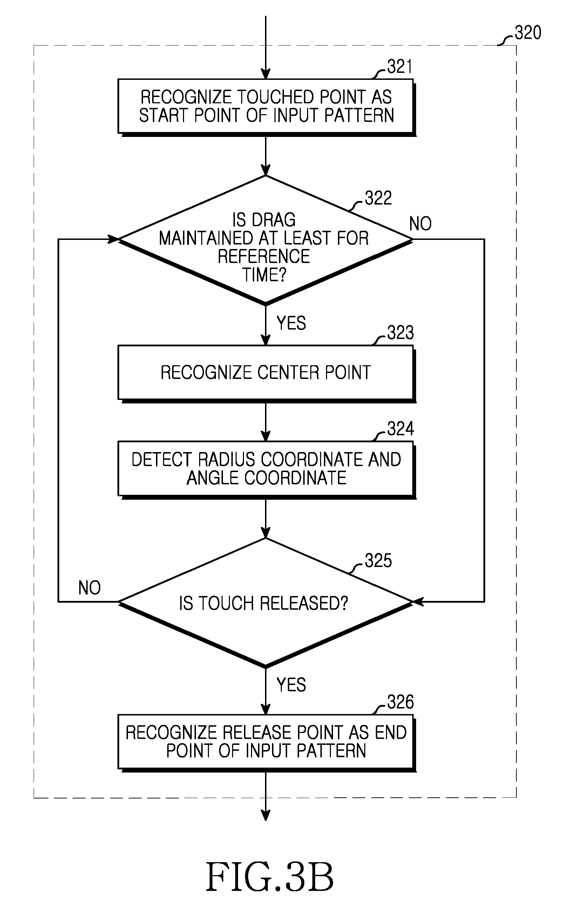

FIG. 3A illustrates a procedure for performing a determined function by using an input pattern in an electronic device according to an embodiment of the present disclosure. FIG. 3B illustrates a detailed procedure of operation 320 of FIG. 3A according to an embodiment of the present disclosure.

Referring to FIG. 3A, the electronic device may detect a touch on a touch screen in operation 300. In this case, the electronic device may touch a lock screen or application access icon displayed to the touch screen.

In operation 310, the electronic device may display a radial pattern input window to a touch input area. In this case, the electronic device may display the radial pattern input window for receiving a pattern input at a touched point.

For, as shown in FIG. 4, the electronic device may display a radial pattern input window 400 including a plurality of circles 410 overlapping with each other and a plurality of straight lines 420 disposed with an interval corresponding to a specific angle inside a circle located in the outermost portion among the plurality of circles 410. Herein, the electronic device defines the touched point as a center point S of the radial pattern input window 400. In this case, the radial pattern input window 400 may have a plurality of intersections (e.g., A, B, C, D, E, etc.) at which the plurality of circles 410 and the plurality of straight lines 420 meet. Accordingly, a user can input an input pattern by dragging the plurality of intersections (e.g., A, B, C, D, E, etc.). For example, the electronic device may arrange the plurality of overlapping circles 410 by considering a user's physical feature such as a user's finger length, finger width, and the like.

The electronic device may define a coordinate of the aforementioned intersection as an angle coordinate and a radius coordinate. The electronic device may determine the angle coordinate of the intersection by using a virtual horizontal line 430 with respect to the center point S. Further, the electronic device may determine a radius coordinate by using the radius of the plurality of circles 410 with respect to the center point S.

For example, the coordinate of the intersection may be defined as (angle coordinate, radius coordinate). In this case, a coordinate of a circle located in the innermost portion with respect to the center point S is (angle coordinate, 1). A coordinate of a circle located in the second innermost portion may be (angle coordinate, 2). In this manner, the coordinate of the circle located in the outermost portion may be (angle coordinate, 5).

The angle coordinate may be determined by using an angle between a radius line of the circle and the horizontal line 430. For example, the angle between the horizontal line 430 and the radius in a counter-clockwise in the horizontal line 430 may be determined as the angle coordinate. That is, a coordinate of the first intersection A is (1/4pi, 1), and a coordinate of the second intersection B is (2/4pi, 2). In this manner, coordinates of third, fourth, and fifth intersections C, D, and E can also be determined.

In operation 320, the electronic device may detect an input pattern including at least one of a straight line or a curved line to the pattern input window. In this case, the electronic device may input an input pattern including the straight line, or may input an input pattern formed by combining the curved line and the straight line.

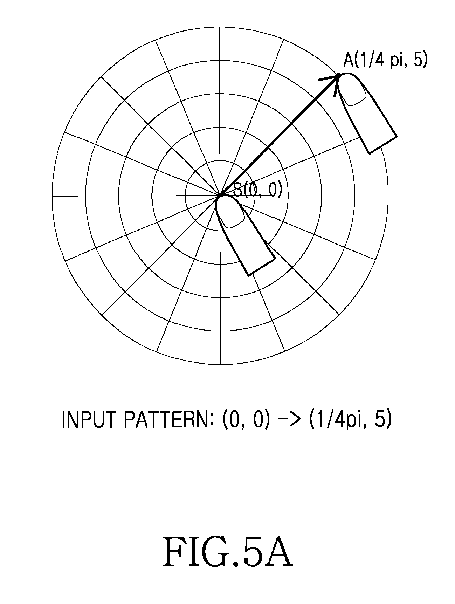

For example, as shown in FIG. 5A, the electronic device may input an input pattern by dragging from a center point S to a first intersection A. In this case, the input pattern may befrom a coordinate (0, 0) of the center point S to a coordinate (1/4pi, 5) of the first intersection A.

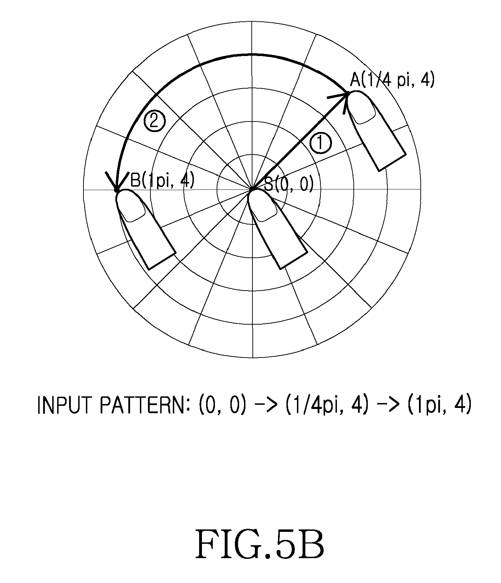

For another example, as shown in FIG. 5B, the electronic device may input an input pattern by dragging from a center point S to a first intersection A and consecutively to a second intersection B. In this case, the input pattern may befrom a coordinate (0, 0) of the center point S to a coordinate (1/4pi, 5) of the first intersection A and a coordinate (1pi, 4) of the second intersection B.

For another example, the electronic device may input an input pattern by drawing a pattern corresponding to a specific character or a specific symbol. In this case, the electronic device may perform a function related to the pattern corresponding to the specific character or the specific symbol. For example, the electronic device may perform a create function by using a pattern such as 'C', and may perform a delete function by using a pattern such as 'D'. However, the present disclosure is not limited thereto, and thus there are various patterns corresponding to a specific character or a specific symbol and various functions performed in response thereto.

Referring to FIG. 3B, a detailed procedure of operation 320 of FIG. 3A is described.

In operation 321, the electronic device may recognize a touched point as a start point of the input pattern. In this case, the electronic device may define the touched point as a center point of a radial input pattern window, and may recognize this as the start point of the input pattern.

In operation 322, the electronic device may determine whether a drag is maintained at least for a reference time. In this case, the electronic device may input the input pattern by dragging the radial input pattern window in a state where a touch is maintained. For example, the electronic device may input an input pattern including at least one of a straight line or a curved line to the input pattern window. In this case, the reference time may be about 0.5 seconds, but the present disclosure is not limited thereto.

If the drag is not maintained at least for the reference time, the electronic device may perform operation 325.

If the drag is maintained at least for the reference time, the electronic device may recognize a center point in operation 323. In this case, the electronic device may store or recognize a point, at which a touch is maintained, as the center point. For example, the electronic device may determine the center point by considering a user's physical feature such as a user's finger length, finger width, and the like.

In operation 324, the electronic device may detect a radius coordinate and an angle coordinate. For example, the electronic device may detect an angle coordinate and radius coordinate of a first intersection A when dragging from a center point S of the radial input pattern window to the first intersection A. For example, the electronic device may detect the angle coordinate of the first intersection A by using a virtual horizontal line with respect to the center point S. Further, the electronic device may detect the radius coordinate of the first intersection A by using a radius of a plurality of circles with respect to the center point S.

The electronic device may determine whether a touch is released in operation 325.If the touch is not released, the electronic device may perform operation 322.If the touch is released, the electronic device may recognize a release point as an end point of the input pattern in operation 326. In this case, the electronic device may confirm that the input of the input pattern ends.

In operation 330, the electronic device may determine whether an input pattern coincides with a designated input pattern. Herein, the designated input pattern may be an input pattern which is input in advance by a user in a previous pattern registration process. In this case, the electronic device may determine whether the input pattern coincides with the designated input pattern by applying an allowable error to the input pattern which is input in advance.

The electronic device may apply an allowable error range to a radius coordinate of the input pattern as shown in FIG. 6A to FIG. 6C. For example, if the allowable error range for the radius coordinate is set to about ±1, the electronic device may equally recognize all of input patterns (0, 0), (1/4pi, 4), (7/4pi, 4) of FIG. 6A, input patterns (0, 0), (1/4pi, 5), (7/4pi, 5) of FIG. 6B, and input patterns (0, 0), (1/4pi, 3), (7/4pi, 3) of FIG. 6C.

For another example, the electronic device may apply the allowable error range to an angle coordinate of an input pattern as shown in FIG. 7A to FIG. 7C. For example, if the allowable error range for the angle coordinate is set to about ±10%, the electronic device may equally recognize all of input patterns (0, 0), (1/4pi, 4), (7/4pi, 4) of FIG. 7A, input patterns (0, 0), (3/8pi, 4), (7/4pi, 4) of FIG. 7B, and input patterns (0, 0), (1/8pi, 4), (7/4pi, 4) of FIG. 7C.

If the allowable error is applied to the input pattern as described above, a recognition rate for an input pattern may be improved. In addition, the electronic device may apply an allowable error range to both of the radius coordinate and angle coordinate of the input pattern.

If the input pattern coincides with the designated input pattern, the electronic device may perform a determined function in operation 340. For example, the electronic device may release a lock screen, or may allow an access of a specific application. However, the present disclosure is not limited thereto, and various functions that can be executed in the application can be applied.

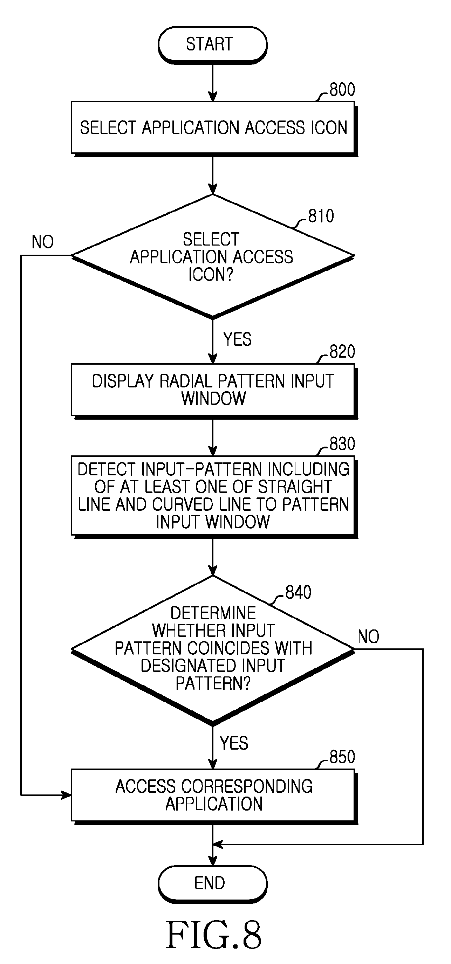

FIG. 8 illustrates a procedure for performing a determined function by using an input pattern in an electronic device according to an embodiment of the present disclosure.

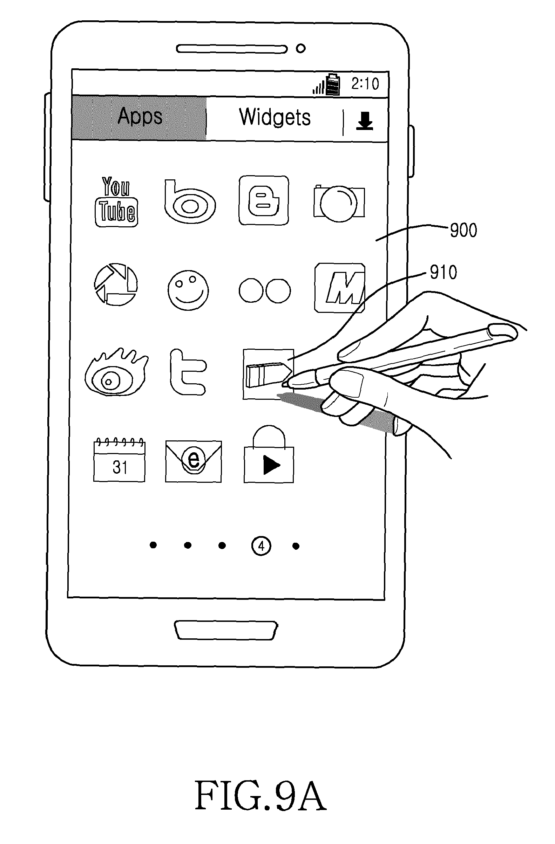

Referring to FIG. 8, the electronic device may select an application access icon in operation 800. For example, the electronic device may select one icon 910 from a plurality of application access icons displayed to a touch screen 900 as shown in FIG. 9A.

In operation 810, the electronic device may confirm whether a usage restriction of a corresponding application is set. In this case, the usage restriction of the application may be set for a security of the application.

If the usage restriction of the application is not set, the electronic device may access the application in operation 850.

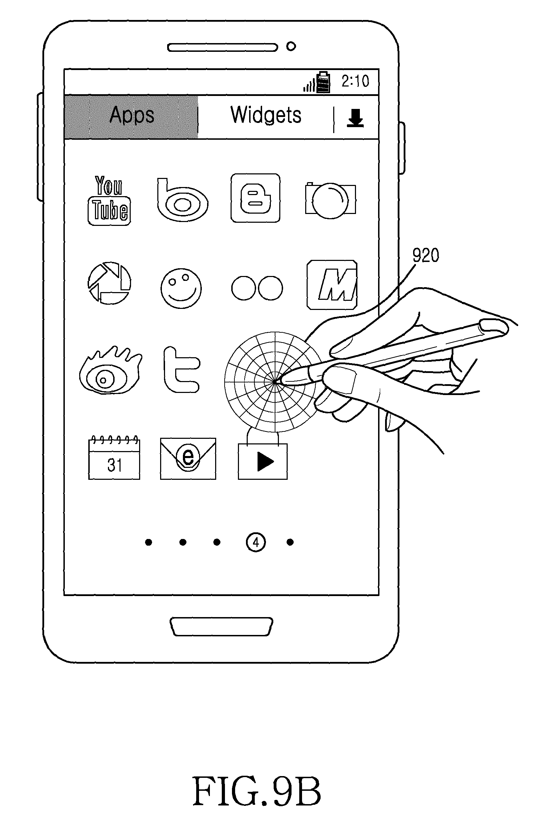

If the usage restriction of the application is set, the electronic device may display a radial pattern input window to a touch input area in operation 820. In this case, the electronic device may display the radial pattern input window 920 for receiving a pattern input at a touched point as shown in FIG. 9B.

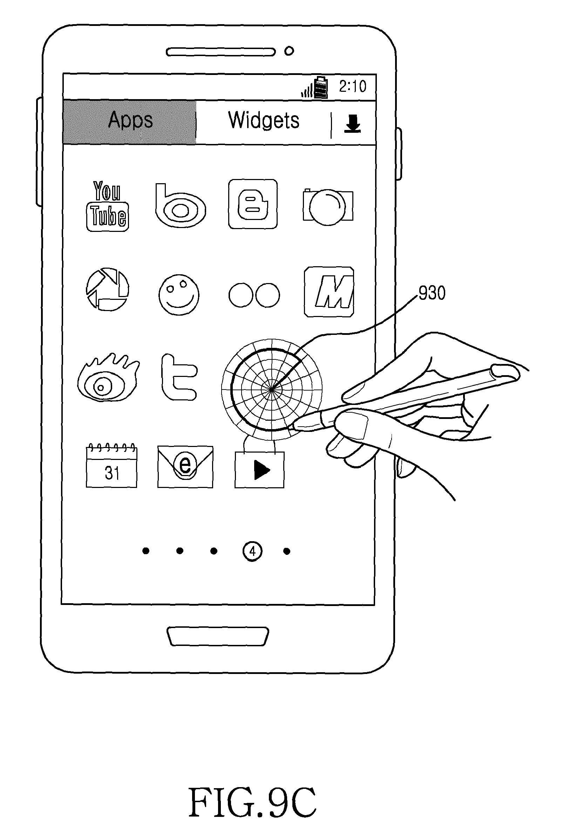

In operation 830, the electronic device may detect an input pattern including at least one of a straight line or a curved line to the pattern input window. In this case, the electronic device may input an input pattern 930 including the straight line, or may input an input pattern formed by combining the curved line and the straight line as shown in FIG. 9C.

In operation 840, the electronic device may determine whether an input pattern coincides with a designated input pattern. Herein, the designated input pattern may be an input pattern which is input in advance by a user in a previous pattern registration process. In this case, the electronic device may determine whether the input pattern coincides with the designated input pattern by applying an allowable error to the input pattern which is input in advance.

If the input pattern coincides with the designated input pattern, the electronic device may access a corresponding application in operation 850. In this case, the electronic device may execute the application to enter a state in which information of the application is readable or writable.

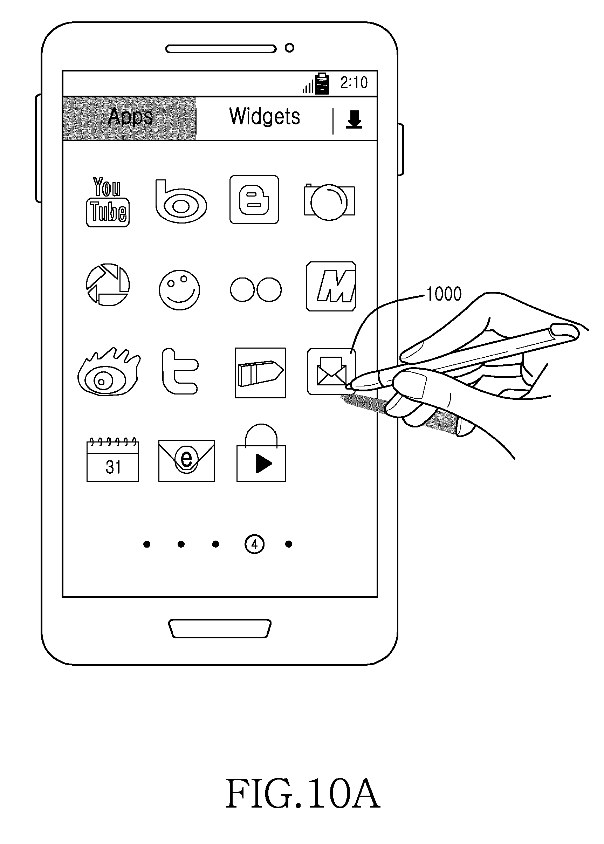

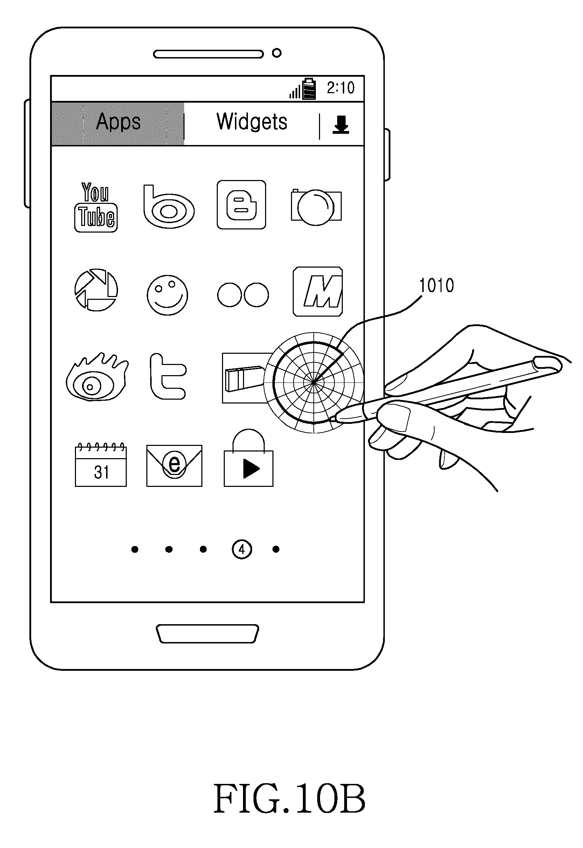

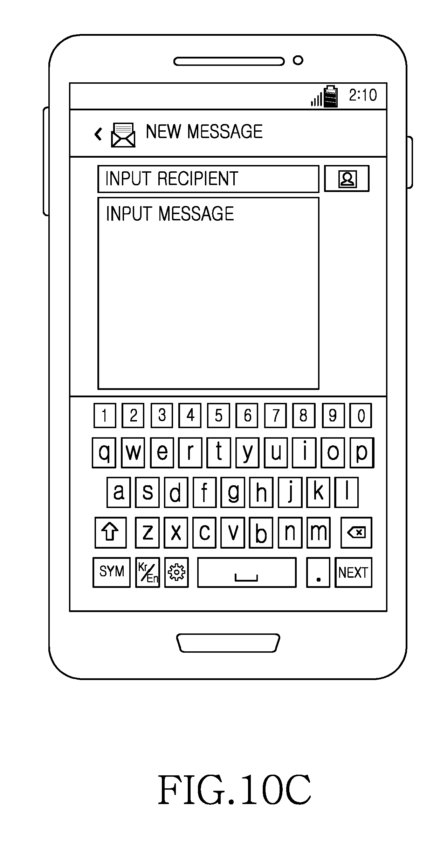

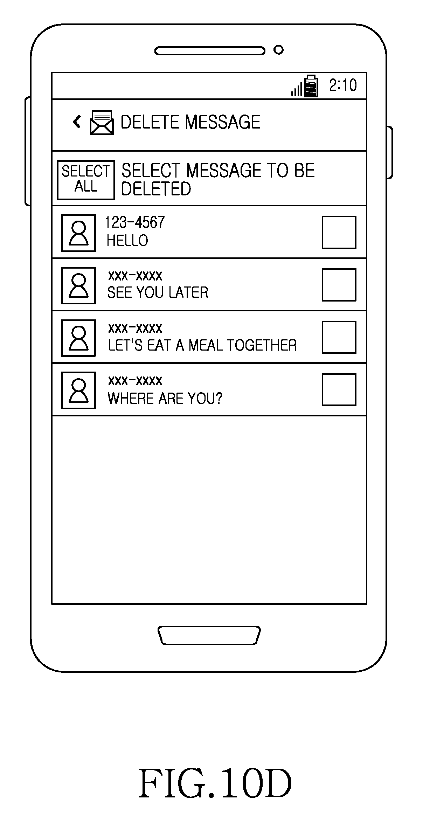

According to various embodiments, the electronic device may input an input pattern by drawing a pattern corresponding to a specific character or a specific symbol. In this case, the electronic device may perform a function related to the pattern corresponding to the specific character or the specific symbol. For example, as shown in FIG. 10A and FIG. 10B, the electronic device may provide several lock patterns 1010 in a process of accessing a message application 1000 to perform a shortcut for each function of the application. For example, the electronic device may perform a new message create function in the message application 1000 by using a pattern such as 'C' as shown in FIG. 10C, and may perform a message delete function in the message application 1000 by using a pattern such as 'D' as shown in FIG. 10D. The application performs various functions according to a designated input pattern.

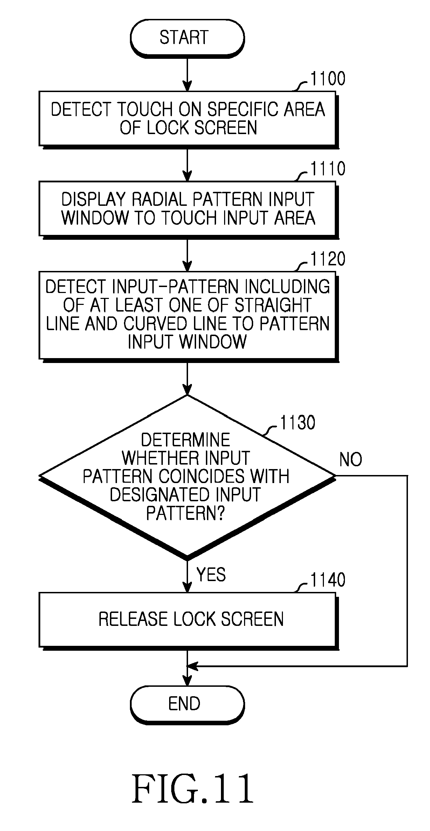

FIG. 11 illustrates a procedure for performing a determined function by using an input pattern in an electronic device according to an embodiment of the present disclosure.

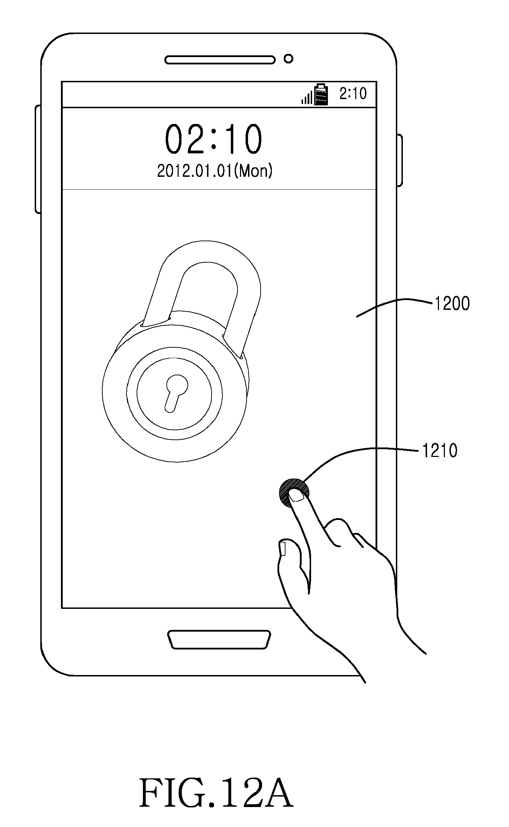

Referring to FIG. 11, the electronic device may detect a touch input to a specific area of a lock screen in operation 1100. In this case, the electronic device may be in a lock state providing security of the electronic device as shown in FIG. 12A. For example, the electronic device may touch a boundary area of a lock screen 1200 (see 1210). However, the present disclosure is not limited thereto, and thus the specific area of the lock screen 1200 may be determined by a user.

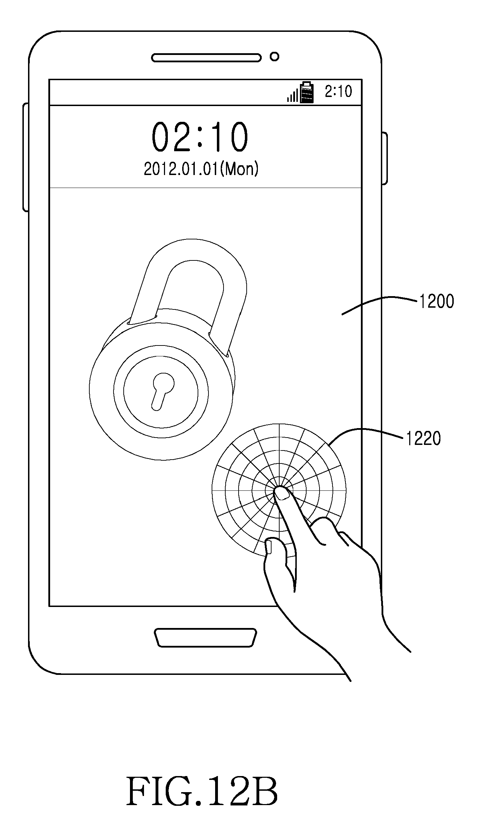

In operation 1110, the electronic device may display a radial pattern input window to a touch input area. In this case, as shown in FIG. 12B, the electronic device may display a radial pattern input window 1220 for receiving a pattern input at a touched point.

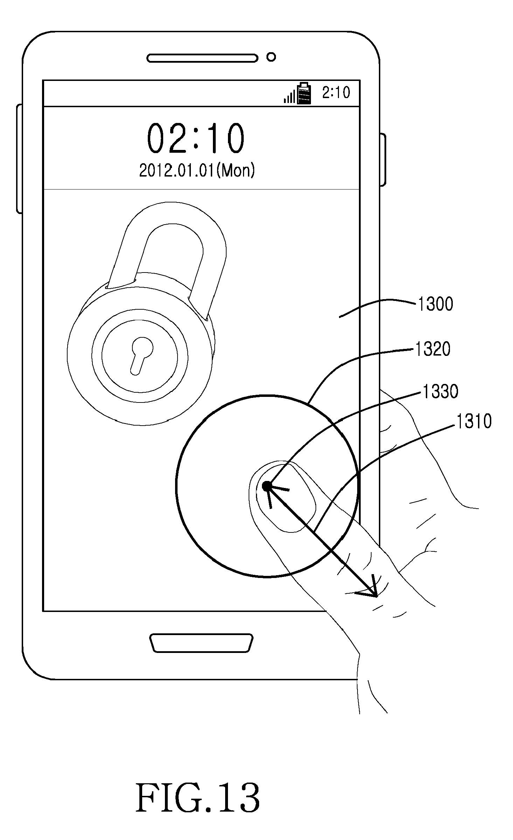

The electronic device may display a pattern input window with consideration for the user's physical features such as a user's finger length, finger width, and the like. For example, as shown in FIG. 13, when a pattern for releasing a lock screen 1300 is input, the electronic device may determine a center point 1330 of a pattern input window 1320 by considering a finger length 1310 which differs for each person.

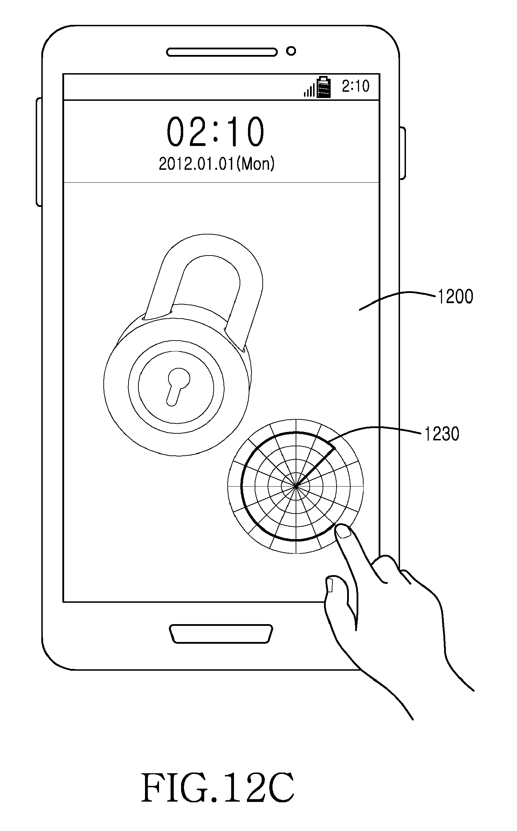

In operation 1120, the electronic device may detect an input pattern including at least one of a straight line or a curved line to the pattern input window. In this case, as shown in FIG. 12C, the electronic device may input an input pattern including the straight line, or may input an input pattern 1230 formed by combining the curved line and the straight line.

For example, as shown in FIG. 13, when a pattern for releasing the lock screen 1300 is input, the electronic device may arrange it by considering a user's physical feature such as a user's finger length, finger width, and the like.

In operation 1130, the electronic device may determine whether an input pattern coincides with a designated input pattern. Herein, the designated input pattern may be an input pattern which is input in advance by a user in a previous pattern registration process. In this case, the electronic device may determine whether the input pattern coincides with the designated input pattern by applying an allowable error to the input pattern which is input in advance.

If the input pattern coincides with the designated input pattern, the electronic device may release a lock screen in operation 1140. In this case, the electronic device may release a lock state of the electronic device, and may display a default screen of the electronic device.

According to various embodiments, a method of an electronic device includes detecting a first input via a display operatively coupled to the electronic device, displaying a radial pattern input window to the display, detecting a second input forming a pattern including at least one of a straight line and a curved line within the radial pattern input window, and when the pattern corresponds to a stored pattern associated with a predetermined function, executing the predetermined function based on the second input.

According to various embodiments, the first input is disposed on an icon displayed to the display, and the predetermined function is associated with the icon.

According to various embodiments, the first input is disposed on a specific area of a lock screen displayed to the display.

According to various embodiments, the radial pattern input window comprises a plurality of circles of differing radii, the plurality of circles centered on the first input, and a plurality of radial lines originating from the first input, the radial lines disposed at regular arc intervals of the plurality of circles.

According to various embodiments, the at least one of the straight line and curved line is formed by selections indicated by the second input designating particular intersections of some of the plurality of circles and some of the plurality of lines.

According to various embodiments, the pattern represents at least one of a specific character or a specific symbol.

According to various embodiments, each intersection of one of the plurality of circles and one of the plurality of lines defines a coordinate including a radius coordinate indicating a particular circle of the plurality of circles, and an angle coordinate indicating a particular radial line of the plurality of lines, the method further including detecting whether the pattern corresponds to a stored pattern by comparing a first sequence of coordinates of the pattern to a second sequence of coordinates of the stored pattern.

According to various embodiments, the method further comprises defining an allowable error range to at least one of the radius coordinates and angle coordinates in the sequence of the pattern.

According to various embodiments, the predetermined function comprises releasing a lock screen.

According to various embodiments, the predetermined function comprises executing a corresponding application.

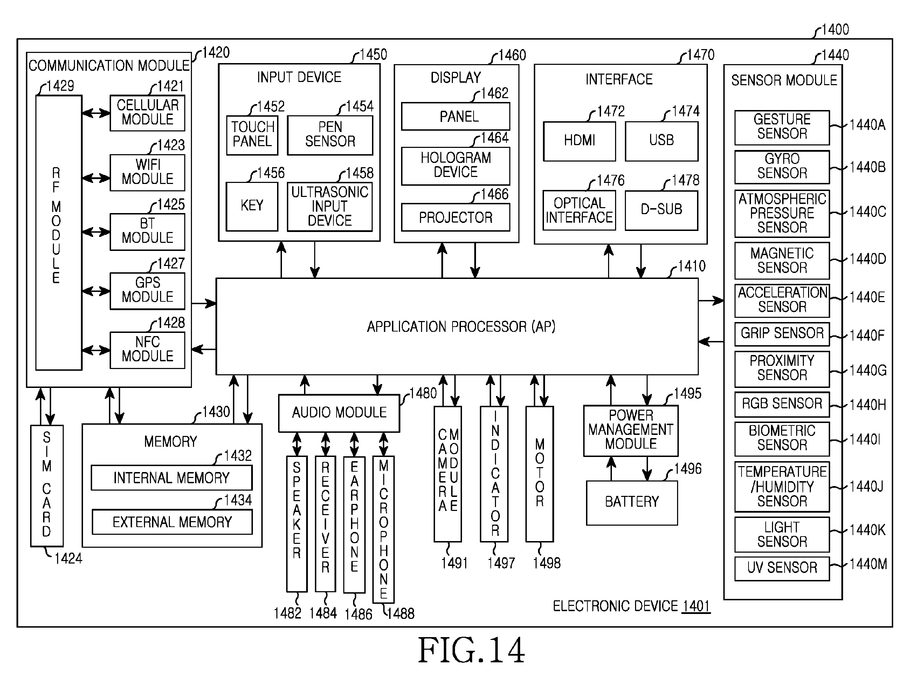

FIG. 14 illustrates a block diagram 1400 of an electronic device 1401 according to various embodiments of the present disclosure. For example, the electronic device 1401 may include all or some parts of the electronic device 100 of FIG. 1. Referring to FIG. 14, the electronic device 1401 includes at least one Application Processor (AP) 1410, a communication module 1420, a Subscriber Identification Module (SIM) card 1424, a memory 1430, a sensor module 1440, an input unit 1450, a display 1460, an interface 1470, an audio module 1480, a camera module 1491, a power management module 1495, a battery 1496, an indicator 1497, and a motor 1498.

The AP 1410 may control a plurality of hardware or software elements connected to the AP 1410 by driving an operating system or an application program, and may process a variety of data including multimedia data and may perform an arithmetic operation. The AP 1410 may be implemented, for example, with a System on Chip (SoC). According to one embodiment, the AP 1410 may further include a Graphic Processing Unit (GPU).

The communication module 1420 may perform data transmission/reception in communication between other electronic devices (e.g., the electronic device 104 or the server 106) connected with the electronic device 1401 (e.g., the electronic device 100) through a network. According to one embodiment, the communication module 1420 may include a cellular module 1421, a Wi-Fi module 1423, a BlueTooth (BT) module 1425, a Global Positioning System (GPS) module 1427, a Near Field Communication (NFC) module 1428, and a Radio Frequency (RF) module 1429.

The cellular module 1421 may provide a voice call, a video call, a text service, an internet service, and the like through a communication network (e.g., LTE, LTE-A, CDMA, WCDMA, UMTS, WiBro, GSM, etc.). In addition, the cellular module 1421 may identify and authenticate the electronic device within the communication network by using a subscriber identity module (e.g., the SIM card 1424). According to one embodiment, the cellular module 1421 may perform at least some of functions that can be provided by the AP 1410. For example, the cellular module 1421 may perform at least some of multimedia control functions.

According to one embodiment, the cellular module 1421 may include a Communication Processor (CP). Further, the cellular module 1421 may be implemented, for example, with a SoC. Although elements such as the cellular module 1421 (e.g., the communication processor), the memory 1430, the power management module 1495, and the like are illustrated as separate elements with respect to the AP 1410 in FIG. 14, the AP 1410 may also be implemented such that at least one part (e.g., the cellular module 1421) of the aforementioned elements is included.

According to one embodiment, the AP 1410 or the cellular module 1421 (e.g., the communication processor) may load an instruction or data, which is received from each non-volatile memory connected thereto or at least one of different elements, to a volatile memory and may process the instruction or data. In addition, the AP 1410 or the cellular module 1421 may store data, which is received from at least one of different elements or generated by at least one of different elements, into the non-volatile memory.

Each of the WiFi module 1423, the BT module 1425, the GPS module 1427, and the NFC module 1428 may include, for example, a processor for processing data transmitted/received through a corresponding module. Although the cellular module 1421, the WiFi module 1423, the BT module 1425, the GPS module 1427, and the NFC module 1428 are illustrated in FIG. 14 as separate blocks, according to one embodiment, at least some (e.g., two or more) of the cellular module 1421, the WiFi module 1423, the BT module 1425, the GPS module 1427, and the NFC module 1428 may be included in one Integrated Chip (IC) or IC package. For example, at least some of processors corresponding to the cellular module 1421, the WiFi module 1423, the BT module 1425, the GPS module 1427, and the NFC module 1428 (e.g., a communication processor corresponding to the cellular module 1421 and a WiFi processor corresponding to the WiFi module 1423) may be implemented with a SoC.

The RF module 1429 may serve to transmit/receive data, for example, to transmit/receive an RF signal. Although not shown, the RF module 1429 may include, for example, a transceiver, a Power Amp Module (PAM), a frequency filter, a Low Noise Amplifier (LNA), and the like. In addition, the RF module 1429 may further include a component for transmitting/receiving a radio wave on a free space in wireless communication, for example, a conductor, a conducting wire, and the like. Although it is illustrated in FIG. 14 that the cellular module 1421, the WiFi module 1423, the BT module 1425, the GPS module 1427, and the NFC module 1428 share one RF module 1429, according to one embodiment, at least one of the cellular module 1421, the WiFi module 1423, the BT module 1425, the GPS module 1427, the NFC module 1428 may transmit/receive an RF signal via a separate RF module.

The SIM card 1424 may be a card in which a SIM is implemented, and may be inserted to a slot formed at a specific location of the electronic device. The SIM card 1424 may include unique identification information (e.g., an Integrated Circuit Card IDentifier (ICCID)) or subscriber information (e.g., an International Mobile Subscriber Identity (IMSI)).

The memory 1430 (e.g., the memory 130) may include an internal memory 1432 or an external memory 1434. The internal memory 1432 may include, for example, at least one of a volatile memory (e.g., a Dynamic RAM (DRAM), a Static RAM (SRAM), a Synchronous Dynamic RAM (SDRAM), etc.) or a non-volatile memory (e.g., a One Time Programmable ROM (OTPROM), a Programmable ROM (PROM), an Erasable and Programmable ROM (EPROM), an Electrically Erasable and Programmable ROM (EEPROM), a Mask ROM, a Flash ROM, a NAND flash memory, a NOR flash memory, etc.).

According to one embodiment, the internal memory 1432 may be a Solid State Drive (SSD). The external memory 1434 may further include a flash drive, and may further include, for example, Compact Flash (CF), Secure Digital (SD), Micro Secure Digital (Micro-SD), Mini Secure digital (Mini-SD), extreme Digital (xD), memory stick, and the like. The external memory 1434 may be operatively coupled to the electronic device 1401 via various interfaces. According to one embodiment, the electronic device 1401 may further include a storage unit (or a storage medium) such as a hard drive.

The sensor module 1440 may measure a physical quantity or detect an operation state of the electronic device 1401, and thus may convert the measured or detected information into an electric signal. The sensor module 1440 may include, for example, at least one of a gesture sensor 1440A, a gyro sensor 1440B, a pressure sensor 1440C, a magnetic sensor 1440D, an acceleration sensor 1440E, a grip sensor 1440F,a proximity sensor 1440G, a color sensor 1440H (e.g., a Red, Green, Blue (RGB) sensor), a bio sensor 1440I,a temperature/humidity sensor 1440J,an illumination sensor 1440K, and an Ultra Violet (UV) sensor 1440M. Additionally or alternatively, the sensor module 1440 may include, for example, an E-node sensor, an ElectroMyoGraphy (EMG) sensor, an ElectroEncephaloGram (EEG) sensor, an ElectroCardioGram (ECG) sensor, a fingerprint sensor, and the like. The sensor module 1440 may further include a control circuit for controlling at least one or more sensors included therein.

The input device 1450 may include a touch panel 1452, a (digital) pen sensor 1454, a key 1456, or an ultrasonic input unit 1458.The touch panel 1452 may recognize a touch input, for example, by using at least one of an electrostatic type, a pressure-sensitive type, oran ultrasonic type. The touch panel 1452 may further include a control circuit. In case of the electrostatic type, not only a physical contact but also a proximity recognition is possible. The touch penal 1452 may further include a tactile layer. In this case, the touch panel 1452 may provide the user with a tactile reaction.

The (digital) pen sensor 1454 may be implemented, for example, by using the same or similar method of receiving a touch input of the user or by using an additional sheet for recognition. The key 1456 may be, for example, a physical button, an optical key, a keypad, or a touch key. The ultrasonic input unit 1458 is a device by which the electronic device 1401 detects a sound wave through a microphone (e.g., a microphone 1488) by using a pen which generates an ultrasonic signal, and is a device capable of radio recognition. According to one example embodiment, the electronic device 1401 may use the communication module 1420 to receive a user input from an external device (e.g., a computer or a server) connected thereto.

The display 1460may include a panel 1462, a hologram 1464, or a projector 1466.The panel 1462 may be, for example, a Liquid-Crystal Display (LCD), an Active-Matrix Organic Light-Emitting Diode (AM-OLED), and the like. The panel 1462 may be implemented, for example, in a flexible, transparent, or wearable manner. The panel 1462 may be implemented as one module with the touch panel 1452.The hologram 1464 may use an interference of light and show a stereoscopic image in the air. The projector 1466 may display an image by projecting a light beam onto a screen. The screen may be located, for example, inside or outside the electronic device 1401. According to one embodiment, the display 1460 may further include a control circuit for controlling the panel 1462, the hologram 1464, or the projector 1466.

The interface 1470 may include, for example, a High-Definition Multimedia Interface (HDMI) 1472, a Universal Serial Bus (USB) 1474, an optical communication interface 1476, or a D-subminiature (D-sub) 1478.The interface 1470 may be included, for example, in the communication unit 160 of FIG. 1. Additionally or alternatively, the interface 1470 may include, for example, a Mobile High-definition Link (MHL) interface, a Secure Digital (SD)/Multi-Media Card (MMC) interface, or an Infrared Data Association (IrDA) standard interface.

The audio module 1480 may bilaterally convert a sound and electronic signal. The audio module 1480 may convert sound information which is input or output, for example, through a speaker 1482, a receiver 1484, an earphone 1486, the microphone 1488, and the like.

The camera module 1491 is a device for image and video capturing, and according to one embodiment, may include one or more image sensors (e.g., a front sensor or a rear sensor), a lens (not shown), an Image Signal Processor (ISP) (not shown), or a flash (not shown, e.g., LED or xenon lamp).

The power management module 1495 may manage a power of the electronic device 1401.Although not shown, the power management module 1495 may include, for example, a Power Management Integrated Circuit (PMIC), a charger Integrated Circuit (IC), or a battery fuel gauge.

The PMIC may be placed, for example, inside an IC or SoC semiconductor. Charging may be classified into wired charging and wireless charging. The charger IC may charge a battery, and may avoid an over-voltage or over-current flow from a charger. According to one embodiment, the charger IC may further include a charger IC for at least one of the wired charging or the wireless charging. The wireless charging may be classified into, for example, a magnetic resonance type, a magnetic induction type, and an electromagnetic type. An additional circuit for the wireless charging, for example, a coil loop, a resonant circuit, a rectifier, and the like, may be added.

The battery gauge may measure, for example, a residual quantity of the battery 1496 and a voltage, current, and temperature during charging. The battery 1496 may store or generate an electricity, and may supply a power to the electronic device 1401 by using the stored or generated electricity. For example, the battery 1496 may include a rechargeable battery or a solar battery.

The indicator 1497 may indicate a specific state, for example, a booting state, a message state, a charging state, and the like, of the electronic device 1401 or a part thereof (e.g., the AP 1410).The motor 1498 may convert an electric signal into a mechanical vibration. Although not shown, the electronic device 1401 may include a processing unit (e.g., a GPU) for supporting a mobile TV. The processing unit for supporting the mobile TV may process media data according to a protocol of, for example, Digital Multimedia Broadcasting (DMB), Digital Video Broadcasting (DVB), media flow, and the like.

Each of the aforementioned elements of the electronic device according to the present disclosure may consist of one or more components, and names thereof may vary depending on a type of electronic device. The electronic device according to the present disclosure may include at least one of the aforementioned elements. Some of the elements may be omitted, or additional other elements may be further included. In addition, some of the elements of the electronic device according to the present disclosure may be combined and implemented as one entity, so as to equally perform functions of corresponding elements before combination.

According to aspects of the present disclosure, an electronic device apparatus includes a memory, a display operatively coupled to the electronic device, and a processor for detecting a first input via the display, displaying a radial pattern input window to the display, detecting a second input forming a pattern including at least one of a straight line and a curved line within the radial pattern input window, and when the pattern corresponds to a stored pattern associated with a predetermined function, executing the predetermined function based on the second input. According to various embodiments, the first input is disposed on an icon displayed to the display, and the predetermined function is associated with the icon.

According to various embodiments, the first input is disposed on a specific area of a lock screen displayed to the display. According to various embodiments, the radial pattern input window comprises a plurality of circles of differing radii, the plurality of circles centered on the first input, and a plurality of radial lines originating from the first input, the radial lines disposed at regular arc intervals of the plurality of circles. According to various embodiments, the at least one of the straight line and curved line is formed by selections indicated by the second input designating particular intersections of some of the plurality of circles and some of the plurality of lines.

According to various embodiments, the pattern represents at least one of a specific character or a specific symbol.

According to various embodiments, each intersection of one of the plurality of circles and one of the plurality of lines defines a coordinate including a radius coordinate indicating a particular circle of the plurality of circles, and an angle coordinate indicating a particular radial line of the plurality of lines ,and the processor further detecting whether the pattern corresponds to a stored pattern by comparing a first sequence of coordinates of the pattern to a second sequence of coordinates of the stored pattern.

According to various embodiments, the processor further defines an allowable error range to at least one of the radius coordinates and angle coordinates in the sequence of the pattern.

According to various embodiments, the predetermined function comprises releasing a lock screen.

According to various embodiments, the predetermined function may include executing a corresponding application.

A term "module" used in the present disclosure may imply a unit including, for example, one of hardware, software, and firmware or a combination of two or more of them. The "module" may be interchangeably used with a term such as a unit, a logic, a logical block, a component, a circuit, and the like. The "module" may be a minimum unit of an integrally constituted component or may be a part thereof. The "module" may be a minimum unit for performing one or more functions or may be a part thereof. The "module" may be mechanically or electrically implemented. For example, the "module" of the present disclosure may include at least one of an Application-Specific Integrated Circuit (ASIC) chip, a Field-Programmable Gate Arrays (FPGAs), ora programmable-logic device, which are known or will be developed and which perform certain operations.

According to various embodiments, at least some parts of a device (e.g., modules or functions thereof) or method (e.g., operations) of the present disclosure may be implemented with an instruction stored in a computer-readable storage media for example. If the instruction is executed by one or more processors (e.g., the processor 120), the one or more processors may perform a function corresponding to the instruction. The computer-readable storage media may be, for example, the memory 130. At least some parts of the programming module may be implemented (e.g., executed), for example, by the processor 120. At least some parts of the programming module may include modules, programs, routines, sets of instructions, processes, and the like, for performing one or more functions.

According to various embodiments, since an input pattern including at least one of a straight line or a curved line is input to a radial pattern input window displayed to a touch input area in an electronic device, convenience can be improved when using a pattern input, a misrecognition rate can be decreased, and a security of the electronic device can be improved.

The computer readable recording medium may be a hardware device configured particularly to store and perform a program instruction (e.g., program module), for example, a hard disk, a magnetic medium such as a floppy disc and a magnetic tape, an optical storage medium such as a Compact Disc-ROM (CD-ROM) or a Digital Versatile Disc (DVD), a magnetic-optic medium such as a floptical disc, a Read Only Memory (ROM), a Random Access Memory (RAM), a flash memory, and the like. An example of the program instruction includes not only a machine language created by a compiler but also a high-level language executable by a computer by using an interpreter or the like. The aforementioned hardware device may be configured to operate as one or more software modules to perform the operation of the present disclosure, and the other way around is also possible.

The module or programming module according to the present disclosure may further include at least one or more elements among the aforementioned elements, or may omit some of them, or may further include additional other elements. Operations performed by a module, programming module, or other elements of the present disclosure may be executed in a sequential, parallel, repetitive, or heuristic manner. In addition, some of the operations may be executed in a different order or may be omitted, or other operations may be added.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA.

As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "micro processor" constitute hardware in the appended claims. Under the broadest reasonable i nterpretation, the appended claims constitute statutory subject matter in compliance wit h 35 U.S.C. §101.

According to various embodiments, in a storage medium having instructions stored therein, when the instructions are executed by at least one processor, the processor is configured to perform at least one operation. The at least one operation may include acquiring a first input via a display operatively coupled to the electronic device, displaying a radial pattern input window to the display, acquiring a second input including at least one of a straight line or a curved line in the pattern input window, determining whether the second input coincides with a designated input, and if the second input coincides with the designated input, performing a determined function.

While the present disclosure has been shown and described with reference to certain embodiments thereof, it will be understood by those skilled in the art that various changes in form and details may be made therein without departing from the ambit of the disclosure as defined by the appended claims. Therefore, the scope of the present disclosure is defined not by the detailed description of the present disclosure but by the appended claims, and all differences within the scope will be construed as being included in the present disclosure.

## Claims

1. A method of an electronic device, the method comprising:
detecting a first input via a display operatively coupled to the electronic device;
displaying a radial pattern input window to the display;
detecting a second input forming a pattern including at least one of a straight line and a curved line with in the radial pattern input window;
when the pattern corresponds to a stored pattern associated with a predetermined function, executing the predetermined function based on the second input.

2. The method of claim 1, wherein the first input is disposed on an icon displayed to the display, and the predetermined function is associated with the icon.

3. The method of claim 1, wherein the first input is disposed on a specific area of a lock screen displayed to the display.

4. The method of claim 1, wherein the radial pattern input window comprises a plurality of circles of differing radii, the plurality of circles centered on the first input, and a plurality of radial lines originating from the first input, the radial lines disposed at regular arc intervals of the plurality of circles.

5. The method of claim 4, wherein the at least one of the straight line and curved line is formed by selections indicated by the second input designating particular intersections of some of the plurality of circles and some of the plurality of lines.

6. The method of claim 5, wherein the pattern represents at least one of a specific character or a specific symbol.

7. The method of claim 5, wherein each intersection of one of the plurality of circles and one of the plurality of lines defines a coordinate including a radius coordinate indicating a particular circle of the plurality of circles, and an angle coordinate indicating a particular radial line of the plurality of lines, the method further comprising:
detecting whether the pattern corresponds to a stored pattern by comparing a first sequence of coordinates of the pattern to a second sequence of coordinates of the stored pattern.

8. The method of claim 7,
further comprising defining an allowable error range to at least one of the radius coordinates and angle coordinates in the sequence of the pattern.

9. The method of claim 1, wherein the predetermined function comprises releasing a lock screen.

10. The method of claim 1, wherein the predetermined function comprises executing a corresponding application.

11. An electronic device apparatus comprising:
a memory;
a display operatively coupled to the electronic device; and
a processor for
detecting a first input via the display;
displaying a radial pattern input window to the display;
detecting a second input forming a pattern including at least one of a straight line and a curved line within the radial pattern input window; and
when the pattern corresponds to a stored pattern associated with a predetermined function, executing the predetermined function based on the second input.

12. The apparatus of claim 11, wherein the first input is disposed on an icon displayed to the display, and the predetermined function is associated with the icon.

13. The apparatus of claim 11, wherein the first input is disposed on a specific area of a lock screen displayed to the display.

14. The apparatus of claim 11, wherein the radial pattern input window comprises a plurality of circles of differing radii, the plurality of circles centered on the first input, and a plurality of radial lines originating from the first input, the radial lines disposed at regular arc intervals of the plurality of circles.

15. The apparatus of claim 14, wherein the at least one of the straight line and curved line is formed by selections indicated by the second input designating particular intersections of some of the plurality of circles and some of the plurality of lines.
